(19) Europäisches Patentamt
European Patent Office
Office européen des brevets

(11) **EP 3 280 110 A1**

(12) **EUROPEAN PATENT APPLICATION**

(43) Date of publication:
**07.02.2018 Bulletin 2018/06**

(51) Int Cl.:
*H04L 29/06* (2006.01)   *H04L 9/32* (2006.01)
*H04W 12/06* (2009.01)

(21) Application number: **16306021.3**

(22) Date of filing: **05.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **GEMALTO SA**
**92190 Meudon (FR)**

(72) Inventors:
• **PETIT, Sébastien**
  **92190 MEUDON (FR)**
• **RUFFIER, Benjamin**
  **92190 MEUDON (FR)**
• **LE CARDINAL, Daniel**
  **92190 MEUDON (FR)**

(74) Representative: **Delaval, Guillaume Laurent**
**Gemalto SA**
**Intellectual Property Department**
**6, rue de la Verrerie**
**92197 Meudon Cedex (FR)**

(54) **A METHOD FOR GENERATING A MODIFIED ONE-TIME PASSWORD ALLOWING TO AUTHENTICATE THE USER FOR WHICH IT HAS BEEN GENERATED**

(57)    The invention related to a method for generating by a first device (330) a modified one-time password (303), the first device being operated by a user, the method comprising the steps of: providing a first one-time password OTP_P (303) generated by a generator (300) implemented by the first device and using a piece of data (302) as an input; providing by the user an authentication password (304); applying (305) a post-treatment function F which uses said one-time password OTP_P (303) and said authentication password (304) as inputs in order to generate as an output a modified one-time password M_OTP having the same format as OTP_P, the function F being chosen such that OTP_P is recoverable from said modified one-time password by applying the inverse function of F and if only the same authentication password as the one used for generating M_OTP is used as an input of said inverse function.

**Fig. 3**

M_OTP=F(PIN_P,OTP_P)

EP 3 280 110 A1

**Description**

TECHNICAL FIELD

The present invention relates to a method for generating a modified one-time password allowing to authenticate the user for which it has been generated. It applies to the technical field of one-time password (OTP) generation.

BACKGROUND OF THE INVENTION

In current mobile authentication solutions based on one-time password (OTP), a personal identification number (PIN) or a password is used to decrypt a shared secret that is involved into the OTP computation. For explanatory purposes, it is referred to PIN codes or numbers in the sequel.

At the time of authentication, when a user enters a wrong PIN number, an invalid shared secret is then generated leading to the generation of an invalid OTP value. The server which is in charge of verifying the OTP value, designated in this description as the authentication server, will then reject the OTP value received from the user. In that case, the user is not authenticated due to a bad PIN entry.

There is a need of an efficient method to protect authentication by password or PIN number while allowing the use of a generic OTP generator.

SUMMARY OF THE INVENTION

The invention relates to a method for generating by a first device a modified one-time password, the first device being operated by a user, the method comprising the steps of:

- providing a first one-time password OTP_P generated by a generator implemented by the first device and using a piece of data as an input;
- providing by the user an authentication password;
- applying a post-treatment function F which uses said one-time password OTP_P and said authentication password as inputs in order to generate as an output a modified one-time password M_OTP having the same format as OTP_P, the function F being chosen such that OTP_P is recoverable from said modified one-time password by applying the inverse function of F and if only the same authentication password as the one used for generating M_OTP is used as an input of said inverse function.

The authentication password is for example of PIN code type.

As an example, the one-time password OTP_P can be generated by a generator using a secret that is shared between the first and second devices.

The function F is for example adapted such that is the one-time passwords OTP_P taken as input arguments are integers in a range of $[0,N[$, then for all authentication password values, F(PIN_P, OTP_P) is an integer in the range $[O,N[$.

As an example, the function F can be adapted such that for all authentication password values PIN, F(PIN,.) is a permutation from $[0,N[$ to $[0,N[$ and F is a bijection.

According to one embodiment of the invention, the function F is adapted such that knowing F(PIN_P,OTP_P) provides no information allowing the recovery of PIN_P and OTP_P.

The invention also relates to a device configured to generate a modified one-time password according to the above method.

The invention also relates to a method for verifying by a second device that a one-time password is provided by an authenticated user before authorizing a transaction. This method comprises the steps of:

- receiving a modified one-time password M_OTP generated by a first device according to the method for generating a modified one-time password;
- providing an authentication password from a database accessible by the second device and associated to the user which is deemed to have operated the first device to generated M_OTP;
- providing a locally generated one-time password OTP_V generated by a generator identical to the one used for generating the first one-time password OTP_P and using as an input a piece of data identical to the one used for generating the first one-time password OTP_P;
- recovering a one-time password from the modified one-time password M_OTP by applying the inverse of function F to said modified one-time password M_OTP using the provided authentication password as an input;
- comparing the recovered one-time password with the locally generated one-time password OTP_V, and if those are identical, authorizing the transaction.

The invention also related to a device configured to authorize a transaction implementing the above method for verifying by a second device that a one-time password is provided by an authenticated user before authorizing a transaction.

BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:

- Figure 1 provides a diagram of a well-known method of OTP authentication in which a PIN number in managed on the mobile side;
- Figure 2 provides an example of an OTP authentication technique in which the PIN numbers are managed by an authentication server;
- Figure 3 illustrates a new technique for OTP authentication using a post-treatment;
- Figures 4 is an example of decomposition of a PIN value into bit groups.

DETAILED DESCRIPTION

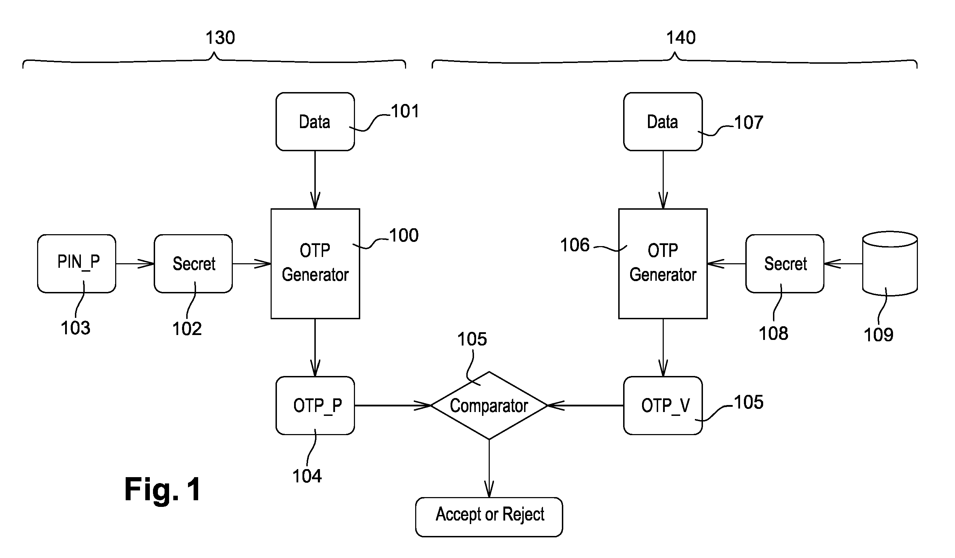

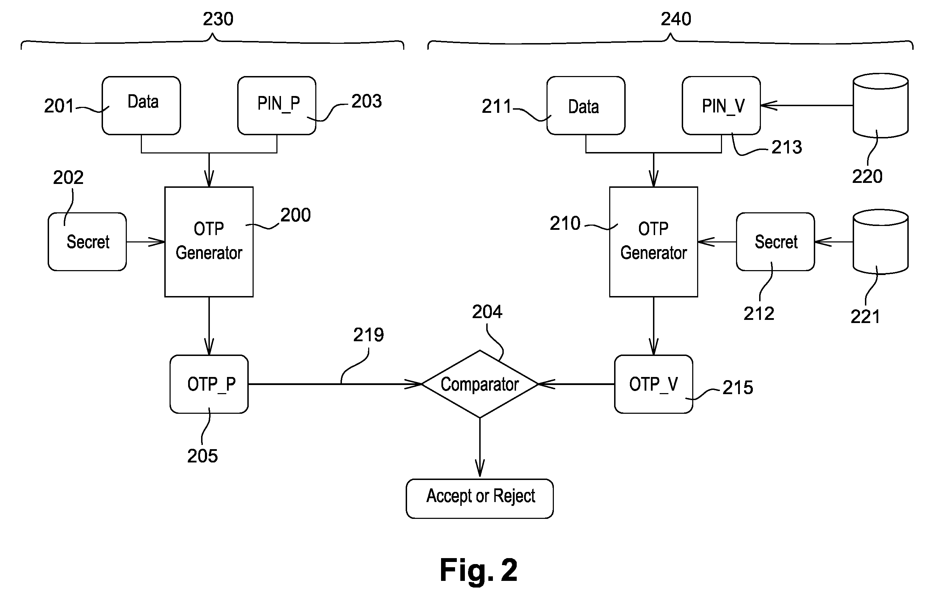

In order to better understand the interest of the invention, Figure 1 and Figure 2 first illustrate two techniques belonging to the state of the art

**Figure 1** provides a diagram of a well-known method of OTP authentication in which a PIN number in managed on the mobile side.

In this description, the user associated with its mobile device is designated as the mobile side 130, 230, 330 and the authentication server is designated as the verifier 140, 240, 340.

According to this example, the verifier 140 doesn't need to know the value of the PIN number as it is not used by the verifier's algorithm.

This technique involves a management of the PIN number locally on the mobile side 130 that is to say by the user with its mobile device or hardware token. The process of changing the PIN number needs to be implemented locally on the mobile side 130. If a user owns several devices, he will need to handle several PIN numbers, typically one per device, or synchronize them manually which is not convenient.

According to this example, the OTP generator 100 is the central part of the process and uses several inputs to generate an OTP. Those inputs are:

- A piece of data 101, for example related to a given transaction;
- A secret 102 that is stored enciphered and which is deciphered when the user enters correctly a PIN number PIN_P 103 that via the interface of its mobile device.

Taking those inputs into account, the OTP generator 100 then does its job and generates the OTP 104 noted OTP_P which can be transmitted to the verifier 140 via a mobile network for example.

On the verifier side 140, once the OTP_P is received, it is compared 105 with an OTP 106 named OTP_V that is generated by the verifier 140. If OTP_P and OTP_V are identical, the transaction is accepted, if not, the transaction is rejected. OTP_V is generated using an OTP generator 106 that is identical to the one 100 used on the mobile side 130. For OTP_P and OTP_V to be identical, the generator 106 needs to use the same inputs 107, 108 as those 101, 102 employed to generated OTP_P, that is to say the same piece of data and the same shared secret. The shared secret 108 is stored in a database 109 accessible by the verifier 140.

Actors such as banks or enterprises often allow their user to have several devices. At the same time, they enforce usage of one common PIN number for all of them. The management of PIN numbers then needs to be transferred to the verifier side 140. The process of changing the PIN number is implemented on the back-end side and there will be no need of manual synchronization of PIN for all the devices.

**Figure 2** provides an example of an OTP authentication technique in which the PIN numbers are managed by an authentication server.

Instead of using the PIN number to decrypt the shared secret as it was the case in the example of Figure 1, the PIN number is part of the transaction data signed by the OTP algorithm. If the user enters a PIN number PIN_P different than the one PIN_V known by the verifier 240 then the generated OTP_P and OTP_V will not match and the user will not be authenticated.

According to this example, the OTP generators 200, 210 use several inputs to generate an OTP. Those inputs are:

- A piece of data 201,211, for example related to a given transaction;
- A secret 202, 212;
- On the mobile side 230, a PIN number PIN_P 203 that is entered by the user via an interface of its mobile device;
- On the verifier side 240, a PIN number PIN_V that is stored 220 or accessible to the authentication server.

Taking those inputs into account, the OTP generator 200 implemented on the mobile side is able to generate an OTP noted OTP_P which can be transmitted 219 to the verifier 240 via a mobile network for example.

On the verifier side 240, once the OTP_P is received, it is compared 204 with an OTP 215 named OTP_V that is generated by the verifier 240. If OTP_P 205 and OTP_V 215 are identical, the transaction is accepted, if not, the transaction is rejected.

OTP_V is generated using an OTP generator 210 implemented by the verifier which is identical to the one 200 used on the mobile side 230.

For OTP_P and OTP_V to be identical, the generator 210 needs to use the same inputs as those employed to generate OTP_P, that is to say the same piece of data 201, 211 and the same shared secret 202, 212. Furthermore, the PIN number PIN_V 213 stored 220 by the verifier 240 for this user shall be identical to the PIN number PIN_P 203 entered by the user.

In this scheme, the process of changing the PIN numbers is implemented only on the back-end side, for example by the authentication sever. However, this technique is not supported by all standardized OTP algorithms such as OATH-HOTP and OATH-TOTP.

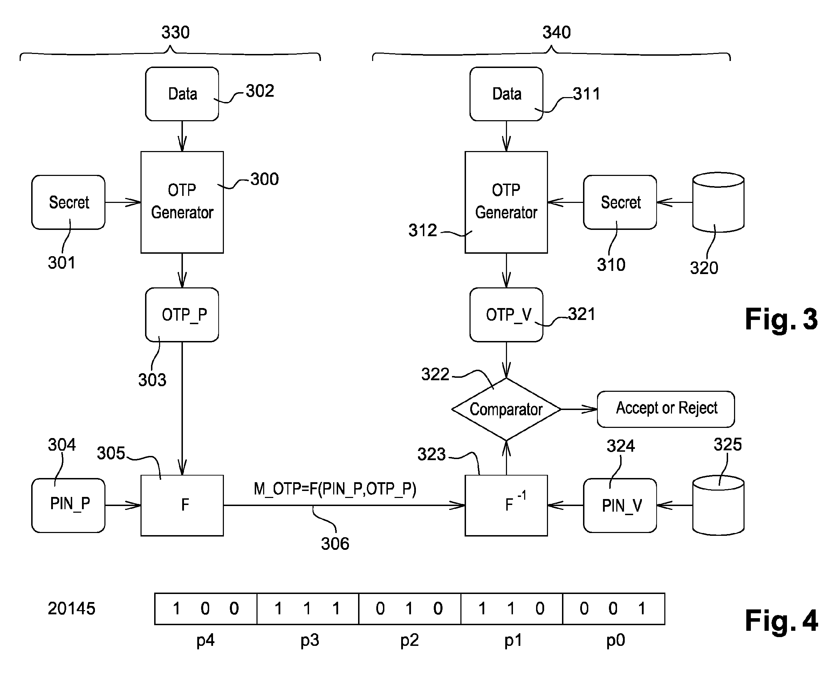

**Figure 3** illustrates a new technique for OTP authentication using a post-treatment.

The following embodiment of the invention is described using PIN codes as passwords used for authenticating a user. However, the skilled person will understand that the invention is applicable when using any kind of authentication password. In other word, an authentication password using in the context of this invention is not necessarily restrained to a sequence of numbers as it is the case for PIN codes.

One of the important characteristics of the technique described hereafter is the introduction of a generic post-treatment that is applied on the generated OTPs. This post-treatment is adapted to take into account authentication passwords such as PIN numbers without interfering with the OTP generation process.

The OTP is generated 300 on the mobile side 330 from a shared secret 301 and optionally using a piece of data 302. For that purpose, a generator 300 is used. This generator can be standardized.

On the mobile side 330 a post-treatment 305 is then applied to the generated OTP 303. A PIN number PIN_P 304 entered by the user is used as an input of this post-treatment. At this stage, PIN_P can be correctly entered or not. In both cases the post-treatment provides a value M_OTP which corresponds to a modified one-time password. This value is then sent 306 to the verifier 340. M_OTP can be expressed as follow:

$$M\_OTP = F(PIN\_P, OTP\_P)$$

The verifier 340 computes an OTP from the shared secret 310 and optionally the same piece of data 311 than the one 302 used on the mobile side 330. An OTP generator 312 similar to the one 300 used on the mobile side 330 is used for that purpose.

The verifier 340 is configured to memorize the shared secrets attributed to the users of the system into a storage area 320 or is configured to access to a database memorizing said shared secrets.

The verifier 340 computes the candidate OTP_V as follow:

$$OTP\_P = F^{-1}\big(PIN\_P, F(PIN\_V, OTP\_V)\big)$$

For that purpose, it uses the PIN number PIN_V that is attributed to the user and known by the verifier 340. The verifier 340 or a database 325 accessible by the verifier 340 stores the PIN numbers attributed the users of the system.

Once OTP_P is received and OTP_V 321 is calculated, the verifier 340 is able to make a comparison 322. OPT_P and OTP_V will be equal if and only if PIN_P 304 and PIN_V 324 are equal. If OTP_P and OTP_V are identical, this means that the user has entered the correct PIN number and is authenticated.

The post-treatment function F can be chosen in such a way that it has the following properties:

- Property P1: if the one-time passwords are integers in a range [0,N[, then for all PIN values, F(PIN, OTP) is an integer in the range [0,N[. Advantageously, this will allow the user to keep the same user-experience as if he was using an non-modified one-time password;
- Property P2: for all PIN values, F(PIN,.) is a permutation from [0,N[ to [0,N[. Further, F must be a bijection for the verifier to revert back the OTP value from both F(PIN_P,OTP_P) and PIN_V;
- Property P3: F is adapted such that knowing F(PIN_P,OTP_P) provides no information allowing to get back PIN_P and OTP_P.

Figure 4 is an example of decomposition of a PIN value into bit groups.

OTP are generally integers comprising n digits, with $N = 10^n$, $OTP \in [0; N[$.

PIN numbers are generally integers of p digits with $P = 10^P, PIN \in [0; P[$.

An example of post-treatment function is provided below:

$$F(PIN, OTP) = g(PIN).OTP\ [N]$$

F is the product of a derivate of PIN and OTP modulo N fulfilling properties P1, P2 and P3 if and only if $g(Pin)^{-1}[N]$ exists, that is to say if and only if $g(Pin)$ and $N$ are relatively prime. [.] refers to the modulo operation.

As $N = 10^n = 2^n 5^n$, it is always possible to construct a function g(.) based on a primes list (but not 2 and 5) to enforce g(PIN) is always relatively prime to N.

As PIN numbers are integers, their binary representation can be split into groups of bits. Figure 4 presents an example from the decimal PIN value '20145' separated into groups of three bits.

If $g(PIN) = 3^{p0}.7^{p1}.11^{p2}.13^{p3}.17^{p4}$ then for any $PIN, g(PIN)$ is relatively prime to N. g(.) can be built from more primes in order to be adapted to the number of PIN values P.

In the example provided on Figure 4, one have:

$$g(20145) = 3^1.7^6.11^2.13^7.17^4$$

Then, for OTP_P='123045', one have:

- M_OTP = OTP_P . g(PIN) . $[10^6]$ ='597 0155'
- $g^{-1}$(PIN).$[10^6]$ ='562839'
- and therefore M_OTP * $g^{-1}$(PIN).$[10^6]$ = OTP_P

According to a preferred embodiment, the invention is used for OTP generators that produce uniformly distributed OTPs or OTPs with a negligible bias. This is the case for example for OATH-HOTP and OATH-TOTP.

**Claims**

1. A method for generating by a first device (330) a modified one-time password (303), the first device being operated by a user, the method comprising the steps of:

   - providing a first one-time password OTP_P (303) generated by a generator (300) implemented by the first device and using a piece of data (302) as an input;
   - providing by the user an authentication password (304);
   - applying (305) a post-treatment function F which uses said one-time password OTP_P (303) and said authentication password (304) as inputs in order to generate as an output a modified one-time password M_OTP having the same format as OTP_P, the function F being chosen such that OTP_P is recoverable from said modified one-time password by applying the inverse function of F and if only the same authentication password as the one used for generating M_OTP is used as an input of said inverse function.

2. A method according to claim 1, wherein the authentication password is of PIN code type.

3. A method according to any of the preceding claims, wherein the one-time password OTP_P (303) is generated by a generator (300) using a secret (301, 310) that is shared between the first (330) and second (340) devices.

4. A method according to any of the preceding claims, wherein the function F is adapted such that is the one-time passwords OTP_P taken as input arguments are integers in a range of [0,N[, then for all authentication password values, F(PIN_P, OTP_P) is an integer in the range [0,N[.

5. A method according to any of the preceding claims, wherein the function F is adapted such that for all authentication password values PIN, F(PIN,.) is a permutation from [0,N[ to [0,N[ and F is a bijection.

6. A method according to any of the preceding claims, wherein the function F is adapted such that knowing F(PIN_P,OTP_P) provides no information allowing the recovery of PIN_P and OTP_P.

7. A device configured to generate modified one-time password according to the method as claimed in claims 1 to 3.

8. A method for verifying by a second device (340) that a one-time password is provided by a authenticated user before authorizing a transaction, the method comprising the steps of:

- receiving (306) a modified one-time password M_OTP generated by a first device (330) according to the method as claimed in any of claims 1 to 6;
- providing an authentication password (324) from a database accessible by the second device and associated to the user which is deemed to have operated the first device to generated M_OTP;
- providing a locally generated one-time password OTP_V (321) generated by a generator (312) identical to the one (300) used for generating the first one-time password OTP_P (303) and using as an input a piece of data (311) identical to the one used for generating the first one-time password OTP_P (303);
- recovering a one-time password from the modified one-time password M_OTP by applying the inverse of function F to said modified one-time password M_OTP using the provided authentication password (324) as an input;
- comparing the recovered one-time password with the locally generated one-time password OTP_V, and if those are identical, authorizing the transaction.

9. A device configured to authorize a transaction implementing the method as claimed in claim 8.

**Fig. 1**

Fig. 2

**Fig. 3**

340

311 — Data
310 — Secret
320 (storage)
312 — OTP Generator
321 — OTP_V
322 — Comparator
Accept or Reject
323 — F$^{-1}$
324 — PIN_V
325 (storage)

**Fig. 4**

330

302 — Data
301 — Secret
300 — OTP Generator
303 — OTP_P
305 — F
306 — M_OTP=F(PIN_P,OTP_P)
304 — PIN_P

| p4 | p3 | p2 | p1 | p0 |
|----|----|----|----|----|
| 1  | 1  | 0  | 1  | 1  |
| 0  | 1  | 1  | 1  | 0  |
| 0  | 1  | 0  | 1  | 0  |
| 1  | 1  | 1  | 1  | 1  |

20145

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/124292 A1 (JUTHANI NIRMAL [IN]) 16 May 2013 (2013-05-16) <br> * paragraph [0049] * <br> * paragraph [0056] * <br> * paragraph [0052] * <br> ----- | 1-9 | INV. <br> H04L29/06 <br> H04L9/32 <br> H04W12/06 |
| A | WO 00/48064 A1 (VASCO DATA SECURITY INC [US]) 17 August 2000 (2000-08-17) <br> * page 6 - page 10; figure 1 * <br> ----- | 1-9 | |
| A | US 2011/113245 A1 (VARADARAJAN RAMMOHAN [US]) 12 May 2011 (2011-05-12) <br> * paragraph [0023] - paragraph [0027] * <br> * paragraph [0031] * <br> * paragraph [0035] * <br> * paragraph [0038] * <br> * paragraph [0057] * <br> ----- | 1-9 | |

|  |
|---|
| TECHNICAL FIELDS SEARCHED (IPC) |
| H04L <br> G06F <br> H04W |

The present search report has been drawn up for all claims

| Place of search | Date of completion of the search | Examiner |
|---|---|---|
| Munich | 28 November 2016 | Tenbieg, Christoph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 30 6021

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2016

| Patent document cited in search report | | Publication date | Patent family member(s) | | Publication date |
|---|---|---|---|---|---|
| US 2013124292 | A1 | 16-05-2013 | CN | 103370688 A | 23-10-2013 |
| | | | EP | 2598984 A1 | 05-06-2013 |
| | | | US | 2013124292 A1 | 16-05-2013 |
| | | | WO | 2012014231 A1 | 02-02-2012 |
| WO 0048064 | A1 | 17-08-2000 | AU | 776552 B2 | 16-09-2004 |
| | | | EP | 1151369 A1 | 07-11-2001 |
| | | | JP | 2003524928 A | 19-08-2003 |
| | | | WO | 0048064 A1 | 17-08-2000 |
| US 2011113245 | A1 | 12-05-2011 | US | 2011113245 A1 | 12-05-2011 |
| | | | WO | 2011060115 A1 | 19-05-2011 |

EPO FORM P0459

For more details about this annex : see Official Journal of the European Patent Office, No. 12/82